**Europäisches Patentamt**

**European Patent Office**

**Office européen des brevets**

(11) Veröffentlichungsnummer: **0 211 327**
A2

## (12) EUROPÄISCHE PATENTANMELDUNG

(21) Anmeldenummer: 86110096.4

(22) Anmeldetag: 23.07.86

(51) Int. Cl.⁴: **B 61 L 3/00**
**B 61 L 27/00**

(30) Priorität: 30.07.85 LU 86027
30.07.85 LU 86028
30.07.85 LU 86029
25.09.85 LU 86095
21.10.85 LU 86130

(43) Veröffentlichungstag der Anmeldung:
25.02.87 Patentblatt 87/9

(84) Benannte Vertragsstaaten:
CH DE FR GB LI NL

(71) Anmelder: BLEICHERT FÖRDERANLAGEN GmbH
Industriestrasse
D-6960 Osterburken(DE)

(72) Erfinder: Beckert, Reiner, Dipl.-Ing.
Gauchhalde 3
D-7300 Esslingen-Zell(DE)

(72) Erfinder: Dorsch, Manfred, Prof. Dipl.-Ing.
Weinbergstrasse 35
D-6962 Adelsheim-Sennfeld(DE)

(72) Erfinder: Auth, Werner, Dr. Prof.-Ing.
In den Weinbergen 13
D-7000 Stuttgart 40(DE)

(74) Vertreter: Hach, Hans Karl, Dr.
Tarunstrasse 23
D-6950 Mosbach-Waldstadt(DE)

(54) **Fahrerloses Transportsystem.**

(57) Ein Steuerungssystem für mehrere fahrerlose Fahrzeuge entlang vorbestimmter Strecken eines Streckennetzes weist einen Wegzähler an jedem Fahrzeug auf, in dem die von einem Null-Punkt des Streckennetzes abgefahrene Weglänge gemessen wird.

Fig. 3

0211327

P 37 363   15.7.86*

# FAHRERLOSES TRANSPORTSYSTEM

Die Erfindung betrifft ein fahrerloses Transportsystem für
mehrere fahrerlose Fahrzeuge, die entlang vorbestimmter
Strecken eines Führungsnetzes geführt werden.

Bei einem aus der DE-A1 3433556 bekannten fahrerlosen
Fahrzeug ist ein von einem mitrollenden Rad angetriebener
Wegzähler vorgesehen, der dazu dient, das Fahrzeug rechtzeitig vor Erreichen einer Halteposition abzubremsen.

Bei einem solchen Steuerungssystem kann das Führungsnetz
aus Schienen bestehen, in denen die fahrerlosen Fahrzeuge
zwangsläufig mechanisch geführt sind. Das Führungsnetz
kann auch aus in der Fahrbahn verlegten Elementen bestehen, die von einem Taster des Fahrzeuges abgetastet werden, wobei der Taster dann entsprechende Lenksignale auslöst. Schließlich kann das Führungsnetz auch imaginär sein
und im Rahmen eines Steuerprogramms in einem Speicher des
Fahrzeugs niedergelegt sei, wobei sich das Steuerprogramm
an örtlichen Markierungen durch Abfühlen dieser Markierungen orientieren und/oder korrigieren kann. Auch ist es
möglich, das Fahrzeug durch Fernbedienung entlang eines
imaginären Führungsnetzes zu führen.

In allen diesen Fällen ist es für eine einwandfreie Führung des Fahrzeuges nötig, ständig zu ermitteln, an welcher Stelle einer vorgesehenen, vom Fahrzeug abzufahrenden
Strecke sich das Fahrzeug befindet. Diese Ermittlung auf
möglichst einfache Weise so durchzuführen, daß die Ermittlungsergebnisse auch leicht weiterverarbeitet werden können, ist Aufgabe der Erfindung.

Die Erfindung löst diese Aufgabe dadurch, daß jedes Fahrzeug einen Wegzähler aufweist, der in Abhängigkeit vom
zurückgelegten Weg weitergezählt wird, daß jede Strecke an

0211327
P 37 363 15.7.86*

einem Bezugspunkt beginnt und an dem gleichen oder einem anderen Bezugspunkt endet, daß an jedem Bezugspunkt ein Marker angeordnet ist, daß an jedem Fahrzeug eine Markertaste angeordnet ist, der bei Überfahren eines Markers ein Markersignal auslöst, daß der Markertaster an den Wegzahler angeschlossen ist und durch das Markersignal den Wegzähler auf 0 oder einen vorgegebenen Wert setzt, sofern er diesen Wert nicht bereits innehat.

Jedes Fahrzeug überfahrt am Beginn einer neuen Strecke einen Bezugspunkt. Von diesem Bezugspunkt ausgehend kann nun jede mögliche Strecke abgezählt sein, so daß der jeweilige Wegzählerstand immer eine eindeutige Position auf der betreffenden Strecke angibt. Die gewählte indivduelle Strecke zusammen mit dem jeweiligen Wegzählerstand ergibt mithin eine eindeutige Information über die Position des Fahrzeuges im Streckennetz.

Die Umschaltung des Wegzählers anhand des überfahrenen Bezugspunktes auf die dem Bezugspunkt zugeordnete Zählung bewirkt, daß sich Zählfehler nicht über längere Strecken zu einem intolerablen Fehler aufaddieren können.

Man kann durch entsprechende räumliche Anordnung der Bezugspunkte sicherstellen, daß diese Korrektur immer erfolgt kurz bevor das Fahrzeug eine Position erreicht, die sehr genau bestimmt werden muß.

Mehrere Fahrzeuge können auf einem Führungsnetz in gegenseitiger Abhängigkeit geführt werden nach einem jedem Fahrzeug mitgegebenen Programm und in Abhängigkeit von der Umgebungssituation, die das betreffende Fahrzeug durch entsprechende Tastorgane ermitteln muß. Einfacher und betriebssicherer ist aber eine zentrale Überwachung sämtlicher Fahrzeuge. Eine dementsprechend bevorzugte Ausgestaltung der Erfindung ist dadurch gekennzeichnet, daß eine an das Führungsnetz angeschlossene Zentrale vorgesehen ist,
von der die Fahrzeuge kontrolliert und geführt werden, daß
zwischen den einzelnen Fahrzeugen einerseits und der Zentrale andererseits eine für die Fahrzeuge individuelle
Kommunikationsverbindung in beiden Richtungen besteht, daß
zu dieser Kommunikationsverbindung auf jedem Fahrzeug ein
Sender gehört, der individuell von der Zentrale fernbedienbar ist, daß der Wegzähler an den zugehörigen Sender
angeschlossen ist und daß der jeweilige Wegzählerstand
oder ein darauf abgeleiteter Wert von der Zentrale abfragbar ist, oder in Abhangigkeit vom Wegzählerstand im Fahrzeug von diesem an die Zentrale gesendet wird. Der
jeweilige Wegzählerstand kann von der Zentrale abfragbar
sein und/oder er kann in Abhängigkeit vom Wegzählerstand
selbsttätig an die Zentrale gesendet werden.

Diese Weiterbildung ermöglicht es auf einfache Weise, in
der Zentrale Informationen über den Standort sämtlicher
Fahrzeuge zu sammeln, indem die Zentrale beispielsweise
die einzelnen Fahrzeuge zyklisch nacheinander nach ihrem
Wegzählerstand abfragt. Dabei kann unterstellt werden, daß
die jeweils von den Fahrzeugen befahrene Strecke in der
Zentrale bekannt ist oder vom Fahrzeug der Zentrale
mitgeteilt wird.

Aufgrund dieses Informationsstandes kann die Zentrale
Kollisionen verhindern. Das ist wichtig wenn das Führungsnetz Verzweigungen und Einmündungen aufweist, weil an den
Einmündungen, wenn keine besonderen Vorkehrungen getroffen
sind, gleichzeitig zufahrende Fahrzeuge zusammenstoßen
können. So kann auch sichgestellt werden, daß kein Fahrzeug von hinten auf ein vorausfahrendes oder vorausstehendes Fahrzeug auffährt.

Eine erste Weiterbildung für ein Führungsnetz, daß Verzweigungen und Einmündungen aufweist, Kollisionen zu vermeiden, ist dadurch gekennzeichnet, daß vor jeder
Einmündung ein Halteplatz bestimmt ist, daß jedes Fahrzeug
bei Erreichen des Halteplatzes anhält, wenn nicht von der
Zentrale ein Durchfahrbefehl vorliegt, und erst weiterfahrt, wenn der Durchfahrbefehl vorliegt, und daß die
Zentrale einen Durchfahrbefehl dann und nur dann erteilt,
wenn die übrigen Fahrstrecken der betreffenden Einmündung
frei sind.

Eine zweite Weiterbildung, die Kollisionen vermeidet, ist
dadurch gekennzeichnet, daß zur Vermeidung von Auffahrunfällen die Zentrale den jweiligen Standort von hintereinander auf der gleichen Fahrstrecke fahrenden Fahrzeugen
uberwacht und bei Unterschreiten einer vorbestimmten
Differenz des Zählerstandes der Wegzähler dieser beiden
Fahrzeuge das hinterherfahrende Fahrzeug vorübergehend zu
einer langsameren Fahrgeschwindigkeit umsteuert oder anhalt.

Diese beiden Weiterbildungen können auch vorteilhaft miteinander kombiniert eingesetzt werden.

Bei einem solchen System kann davon ausgegangen werden,
daß die Fahrzeuge immer nach vorgegebenen Fahrroutinen
fahren, wobei eine Fahrroutine die Fahrbewegungen eines
Fahrzeuges und unter Umständen auch die Betätigung von
Funktionseinheiten während dieser Fahrroutine umfaßt.

Eine solche Fahrroutine beginnt an einer Bezugsmarke und
endet an einer Bezugsmarke, wobei der Anfang und das Ende
durch die gleiche oder durch verschiedene Bezugsmarken
bestimmt sein kann.

Es ist eine weitere Aufgabe der Erfindung, ein System
solchen Fahrroutinen entsprechend auf einfache Weise
programmierbar auszugestalten. Diese Aufgabe wird dadurch gelöst, daß jedes Fahrzeug eine automatische Fahr- und
Lenksteuerschaltung aufweist, die von dem Wegzähler und
den Bezugsmarkensignalen angesteuert wird, daß die
Lenksteuerschaltung aller Fahrzeuge auf die gleiche
Befehlsverarbeitung eingerichtet ist, daß an jedem Fahrzeug ein Fahrzeugantrieb und ein Lenkantrieb vorgesehen
ist, der von der Fahr- und Lenksteuerschaltung angesteuert
wird, daß mindestens eines der Fahrzeuge als Lernfahrzeug
ausgerustet ist, daß das Lernfahrzeug eine auf Handbetrieb
umschaltbare Fahr- und Lenksteuerschaltung aufweist mit
zugehörigen, von außen zugänglichen Handhaben, daß ein
Fahrroutinenspeicher vorgesehen ist, in dem einer oder
mehrere Fahrroutinen abfragbar speicherbar sind, daß eine
Fahrroutine aus Fahrroutinesignalen besteht, die die Fahr-
und Lenkbefehle und gegebenenfalls Befehle für Funktionseinheiten für eine an einem Bezugsmarker beginnende und an
einem Bezugsmarker endende Fahrstrecken enthalten, daß im
Lernfahrzeug ein Lernsignalgenerator vorgesehen ist, der
in Abhängigkeit von den bei Handbetrieb hervorgerufenen
Fahr- und Lenkbewegungen und Befehlen für Funktionseinheiten Lernsignale erzeugt, aus denen die zugehörigen
Fahrroutinen gebildet werden können, und daß ein Kommunikationssystem zur Übermittlung der Lernsignale oder daraus
abgeleiteter Fahrtroutinensignale an den Fahrroutinenspeicher vorgesehen ist.

Zur Programmierung einer bestimmten Fahrroutine genügt es
im sogenannten Lernbetrieb, das Lernfahrzeug von Hand entlang der entsprechenden Fahrstrecke zu führen und dabei
gegebenenfalls ebenfalls von Hand die gewünschten Bewegungen der Funktionseinheiten auszulösen. Aus den dabei von
Hand eingegebenen Befehlen werden Lernsignale abgeleitet,
die dann die zugehörige Fahrroutine bilden. Die Fahrroutine kann dann abgespeichert werden und kann sämtliche Befehle enthalten, um die von Hand gesteuerte Fahrt des
Lernfahrzeuges mit den zugehörigen Bewegungen der Funktionseinheiten zu wiederholen. Dabei empfiehlt es sich, die Fahrgeschwindigkeit aus dem Handbetrieb für die Fahrroutine auf einen optimalen Wert umzuspeichern und zu vergleichmäßigen, weil davon ausgegangen werden kann, daß bei Handbetrieb nicht mit der für Dauerbetrieb optimalen Geschwindigkeit sondern mit einer möglicherweise sehr viel niedrigeren Geschwindigkeit gefahren wurde.

Neben Fehlern bedingt durch die Länge des zurückgelegten Weges können sich auch Fehler durch eine Abweichung von der richtigen Fahrtrichtung ergeben.

Aufgabe einer Weiterbildung der Erfindung ist es, den Kurs der Fahrzeuge gegen solche Fehler zu sichern.

Diese Aufgabe wird dadurch gelöst, daß ein Fahrroutinenspeicher an jedem Fahrzeug vorgesehen ist, der von dem Wegzahler angesteuert wird und in dem ein oder mehrere Fahrroutinen abfragbar speicherbar sind, wobei eine Fahrroutine aus Fahrroutinensignalen besteht, die die Fahr- und Lenkbefehle und gegebenenfalls Befehle für Funktionseinheiten für eine an einer Bezugsmarke beginnende und an einer Bezugsmarke endende Fahrstrecke enthalten, daß Führungsleiterabschnitt in einer Ebene planparallel zur Fahrbahn in Richtung und entlang der Strecken verlegt sind und daß ein Führungstaster an jedem Fahrzeug vorgesehen ist, der beim Anfahren an einen Führungsleiterabschnitt ein Lenkungskorrektursignal erzeugt in Abhängigkeit der Abweichung des tatsächlich gefahrenen Kurses gegenüber dem durch den Führungsleiterabschnitt vorgegebenen Kurs, aus dem Korrekturbefehle für die Lenkung abgeleitet werden.

Man könnte den Kurs sichern durch einen entlang der gesamten Fahrstrecke verlegten Führungsleiterabschnitt. Das ist aber für die Installation sehr aufwendig und erfordert auch zusätzliche Maßnahmen beim Überfahren von Abzweigun-

gen. Nach einer bevorzugten Ausgestaltung werden nur diskrete Führungsleiterabschnitte benötigt, die entsprechend einfach zu installieren sind. Es genügt, wenn ein solcher Führungsleiterabschnitt eine mit Toleranzzugabe für die Lenkungskorrektur des maximal zulässigen Kursfehlers gerade ausreichende Länge aufweist und der Abstand zwischen zwei der gleichen Strecke hintereinander zugeordneten Führungsleiterabschnitten mit Toleranzzugabe so groß ist, daß der maximal zulässige Kursfehler bis zum jeweils nächsten Führungsleiterabschnitt normalerweise nicht überschritten wird.

Eine bevorzugte Ausgestaltung, bei der die Steuerung der diversen Fahrzeuge eines Transportsystems von der Zentrale aus erfolgt, ist dadurch gekennzeichnet, daß das Führungsnetz aus in einer Ebene parallel zur Fahrbahn verlegten Führungsdrähten besteht, daß in der Zentrale ein Führungsstromgenerator angeordnet ist, der ausgangsseitig an die Führungsdrähte angeschlossen ist und diese mit Führungswechselstrom beaufschlagt, daß jedes Fahrzeug einen Induktionsspulen aufweisenden, auf den jeweils angesteuerten Führungsdraht gerichteten auf den Führungswechselstrom abgestimmten Führungstaster aufweist, und daß dem Führungstaster eine Auswertschaltung nachgeordnet ist, die aufgrund der im Führungstaster induzierten Führungswechselströme ein Lenksignal erzeugt zur Lenkung des Fahrzeuges entlang dem Führungsdraht.

Wenn die Steuerung von einer Zentrale aus erfolgt, ist es erforderlich, der Zentrale notwendige Informationen über den Zustand und die Funktion der einzelnen Fahrzeuge zu ermitteln und von der Zentrale an die einzelnen Fahrzeuge Befehle zu ermitteln. Ein solches Kommunikationssystem kann auf drahtloser Übertragung beruhen. Das ist aber aufwendig und auch störanfällig.

Aufgabe einer Weiterbildung der Erfindung ist es, diese Kommunikation möglichst einfach und betriebssicher zu gestalten.

Diese Aufgabe wird dadurch gelöst, daß daß die Signalübermittlung von der Zentrale zu den Fahrzeugen digitalisiert erfolgt mit einer Tastung der Frequenz F des dem betreffenden Fahrzeug zugeordneten Führungswechselstroms auf digitale "0"= F + DF und digitale "1" = F - DF, mit DF = 0,05 F bis 0,10 F, daß der Führungstaster eingangsseitig gedämpft ist auf mindestens eine auswertbare Bandbreite F +/- DF, und daß dem Führungstaster neben der Auswertschaltung ein Empfänger für die Digitalsignale der Zentrale nachgeordnet ist. Die Führungsfrequenz liegt zweckmäßig zwischen 5 und 10 KHZ, vorzugsweise bei 5,6 KHZ (1 KHZ ist gleich 1000 Schwingungen pro Sekunde).

Die Erfindung nutzt für diese Signalübermittlung die sowieso für den Führungswechselstrom vorhandenen Führungsleiter und Magnetfeldsensoren aus. Die Signalübermittlung erfolgt, abgesehen von der kurzen drahtlosen Strecke zwischen den Magnetfeldsensoren und dem in unmittelbarer Nähe der Magnetfeldsensoren gelegenen Führungsleiterabschnitt, über den Führungsdraht, erfordert also keine zusätzlichen Übertragungsmittel und ist wegen der weitgehend drahtgebundenen Übertragung durch äußere elektrische Felder weniger störanfällig als wenn über die ganze Strecke drahtlos übermittelt wird. Die Störanfälligkeit kann man weiter reduzieren durch die Wahl geeigneter Übertragungsfrequenzen und geeigneter Modulationsverfahren.

Auch für den umgekehrten Weg der Signalübermittlung von den Fahrzeugen zur Zentrale nutzt eine Weiterbildung den Führungsdraht aus. Diese Weiterbildung ist dadurch gekennzeichnet, daß für Signalübermittlung von den Fahrzeugen zur Zentrale in jedem Fahrzeug ein Sender angeordnet ist,

0211327
P 37 363   15.7.86*

für dessen Sendefrequenz W vorzugsweise gilt: W = 5 F bis
20 F, daß dieser Sender ausgangsseitig an eine Antenne
angeschlossen ist, die auf den vom Fahrzeug angesteuerten
Führungsdraht gerichtet ist, daß die Signale digitalisiert
dieser Sendefrequenz aufgeprägt werden, und daß an der
Zentrale ein Empfänger vorgesehen ist, der unter Zwischenschaltung eines auf diese Signalfrequenz abgestimmten
Filters an den Führungsdraht angeschlossen ist. Die Obergrenze der Sendefrequenz ist möglicherweise durch gesetzliche Vorschriften bedingt. Zweckmäßig liegt die Sendefrequenz im Bereich zwischen 20 und 100 KHZ.

Es bedarf für diese Signalübermittlung nur einer zusätzlichen Antenne, die sehr geringe Sendeenergie erfordert,
weil die Antenne unmittelbar auf den Führungsdraht gerichtet sein kann und die Signalübermittlung über die längste
Strecke über den Führungsdraht erfolgt. Auch die Signalübermittlung in dieser Richtung ist, da sie über die
größte Strecke drahtgebunden ist, durch äußere Einwirkungen weniger störanfällig.

Bevorzugt ist, daß für jede Strecke eine besondere
Führungsfrequenz vorgesehen ist und daß ein Fahrzeug durch
Abstimmung oder Umschaltung des zugehörigen Führungstasters auf eine ausgewählte Strecke steuerbar ist. Dabei
empfiehlt es sich, für jede Führungsfrequenz einen
besonderen Führungsleiter in die Fahrbahn zu verlegen.

Man kann aber auch mit einer einzigen Führungsfrequenz
mehrere Fahrzeuge individuell auf einem Führungsnetz mit
mehreren Strecken führen, das geschieht vorzugsweise
derart, daß daß das Führungsnetz , ausgehend von einem
Führungsleiteranfang sich elektrisch zu mehreren Führungsleiterstrecken verzweigt, daß der Führungsleiteranfang
elektrisch an den einen Führungsstromausgangspol des
Führungsstromgenerators angeschlossen ist, daß die offenen Enden aller Führungsleiterstrecken elektrisch über je
einen komplexen Abschlußwiderstand an den anderen Führungsstromausgangspol des Führungsstromgenerators angeschlossen
sind und daß der Widerstandswert des Abschlußwiderstandes
für die betreffende Führungsfrequenz wesentlich größer ist
als der Innenwiderstand "Ri" der zugehörigen Führungsleiterstrecke. In einem solchen Fall müssen die einzelnen
Fahrzeuge beim Überfahren von Verzweigungen Steuerbefehle
von der Zentrale erhalten, die angeben, welcher Zweig der
Verzweigung angefahren wird.

Eine bevorzugte Ausgestaltung der Erfindung ist dadurch
gekennzeichnet, daß Bezugsmarken vorgesehen sind, die ein
der betreffenden Bezugsmarke eindeutig zuordbares Bezugsmarkensignal auslösen, daß daneben Bezugsmarken vorgesehen
sind, die nur ein neutrales Bezugsmarkensignal auslösen,
und daß ein solches neutrales Bezugsmarkensignal mit einer
im Fahrroutienenspeicher abgelegten, der Bezugsmarkenposition eindeutig zuordbaren Erwartung zur Auswertung verglichen wird.

Eine andere bevorzugte Ausgestaltung der Erfindung ist
dadurch gekennzeichnet, daß ein Zielparameterspeicher
vorgesehen ist, der mit dem Fahrroutinenspeicher
zusammenwirkt und bei Eingabe von Zielparametern, die
einem bestimmten Fahrtziel zugeordnet sind, in einer
gegebenenfalls gerade gefahrenen Fahrroutine dieses Ziel
sucht und, wenn es gefunden wird, seine Ansteuerung
auslöst, und, falls dieses Ziel in der gerade gefahrenen
Fahrroutine nicht vorliegt oder gerade keine Fahrroutine
gefahren wird, ein Anfahren über anschließende Fahrroutine
optimiert sucht und ansteuert.

Die Erfindung wird nun anhand der beigefügten Zeichnung
näher erläutert.

P 37 363 15.7.86

In der Zeichnung zeigt:

Figur 1          im Blockschaltbild ein Transportsystem,
                 und zwar in Figur 1A die Ausrüstung der
                 Zentrale und in Figur 1B die Ausrüstung
                 eines Fahrzeuges,

Figur 2          ein Streckennetz, das aus Führungsdrähten
                 gebildet ist, die in die Fahrbahn verlegt
                 sind,

Figur 2 A        ausschnittsweise eine Abänderung zu
                 Figur 2,

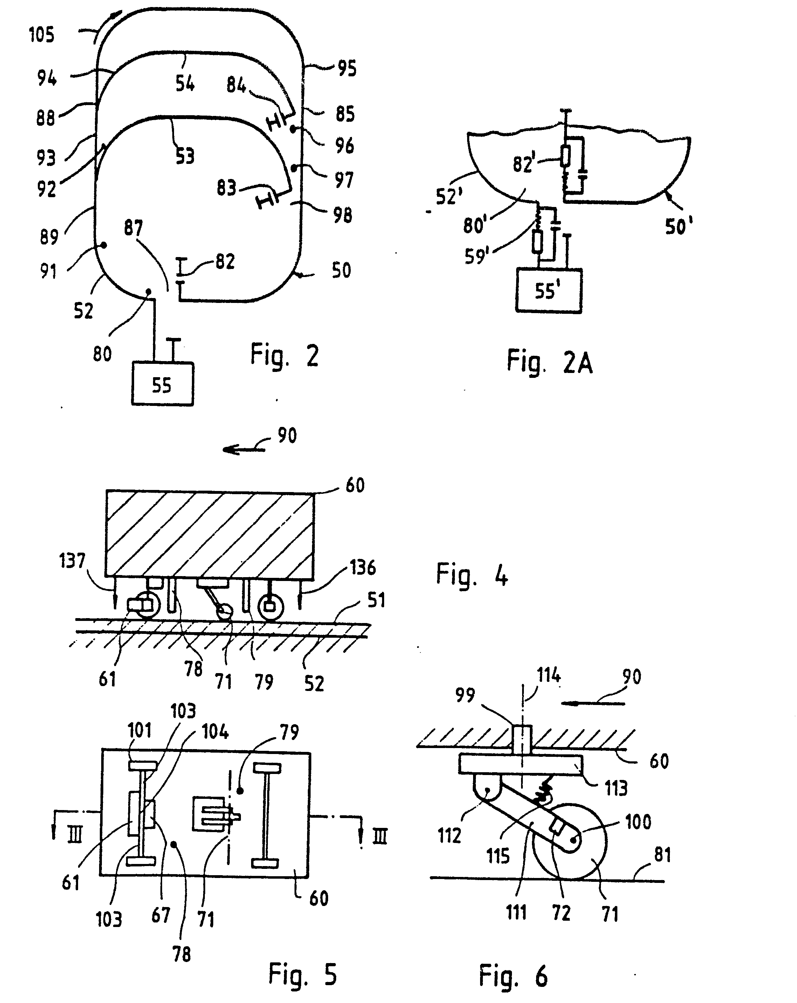

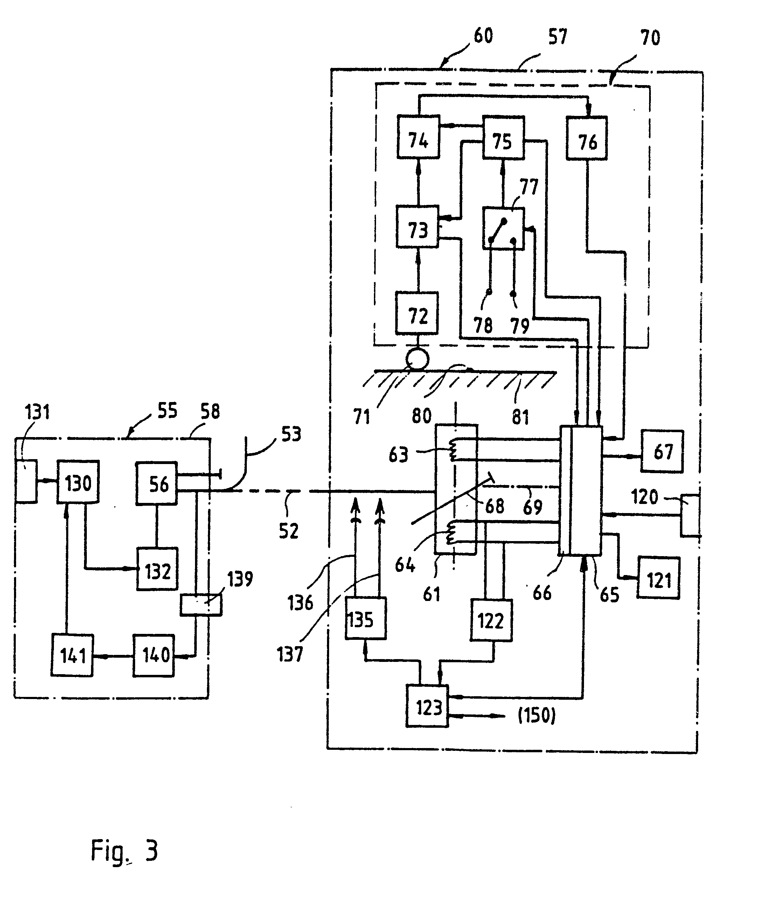

Figur 3          im Blockschaltbild ein Transportsystem,
                 dessen Fahrzeuge induktiv entlang von
                 Führungsdrähten des Streckennetzes nach
                 Figur 2 gesteuert werden,

Figur 4          ein entsprechend Figur 3 ausgerüstetes
                 Fahrzeug im Schnitt III aus Figur 5,

Figur 5          die Ansicht gemäß dem Pfeil V aus Figur
                 4,

Figur 6          ein Zählrad für den Wegzähler eines Fahr-
                 zeugs,

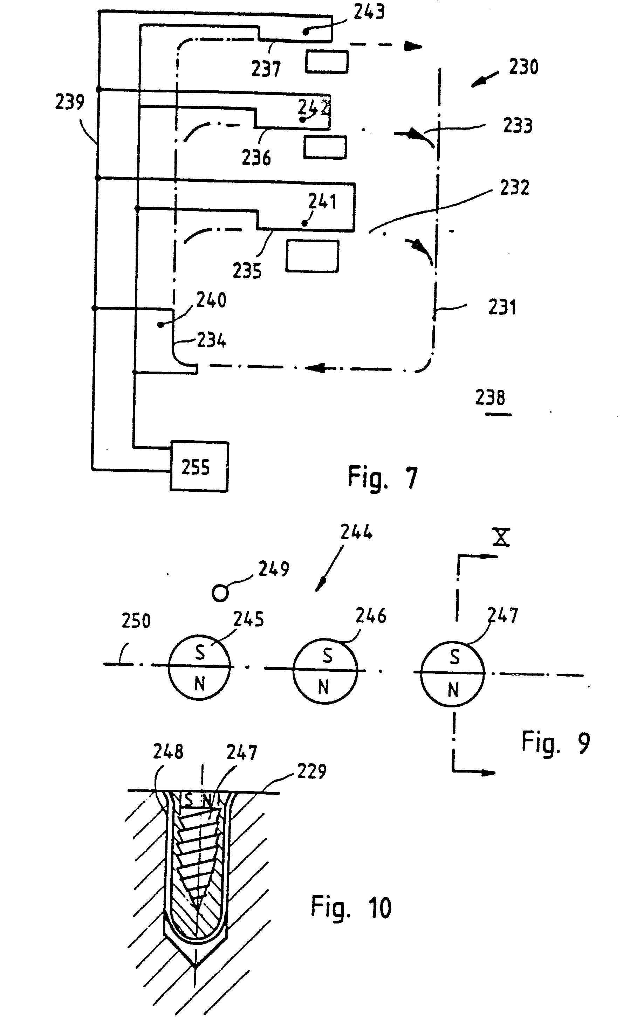

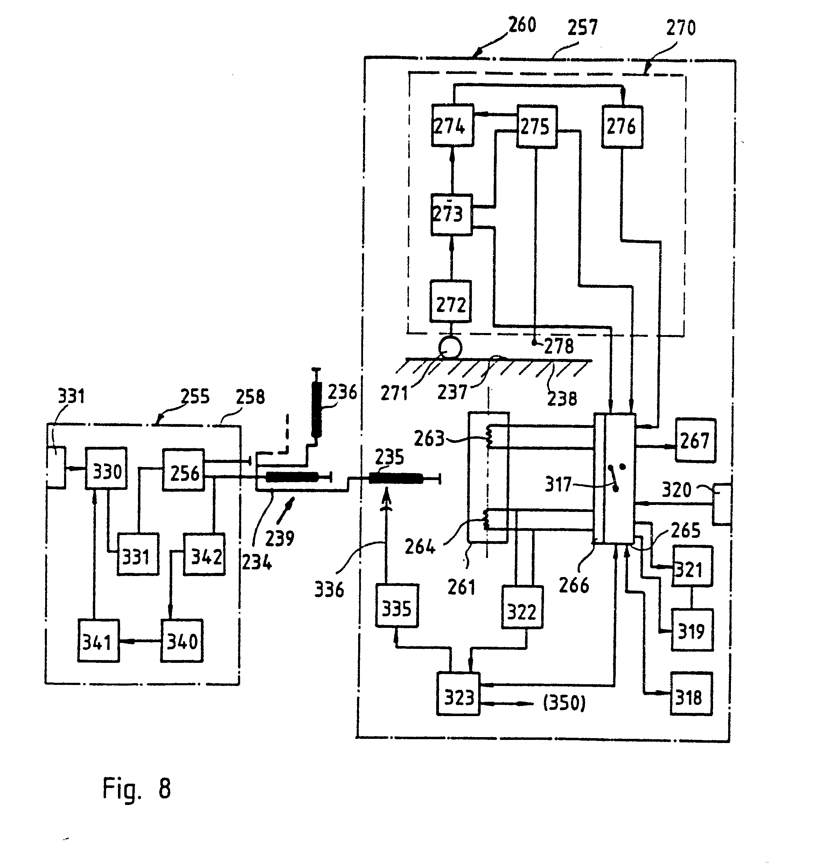

Figur 7          ein Streckennetz mit elektrisch leitenden
                 Führungsleiterabschnitten, die in die
                 Fahrbahn verlegt sind,

Figur 8          im Blockschaltbild ein Transportsystem,
                 dessen Fahrzeuge nach dem Streckennetz
                 nach Figur 7 fahren,

Figur 9          einen Abschnitt eines Streckennetzes mit
                 einem permanentmagnetischen Führungsleiterabschnitt, und

Figur 10         den Teilschnitt X aus Figur 9.


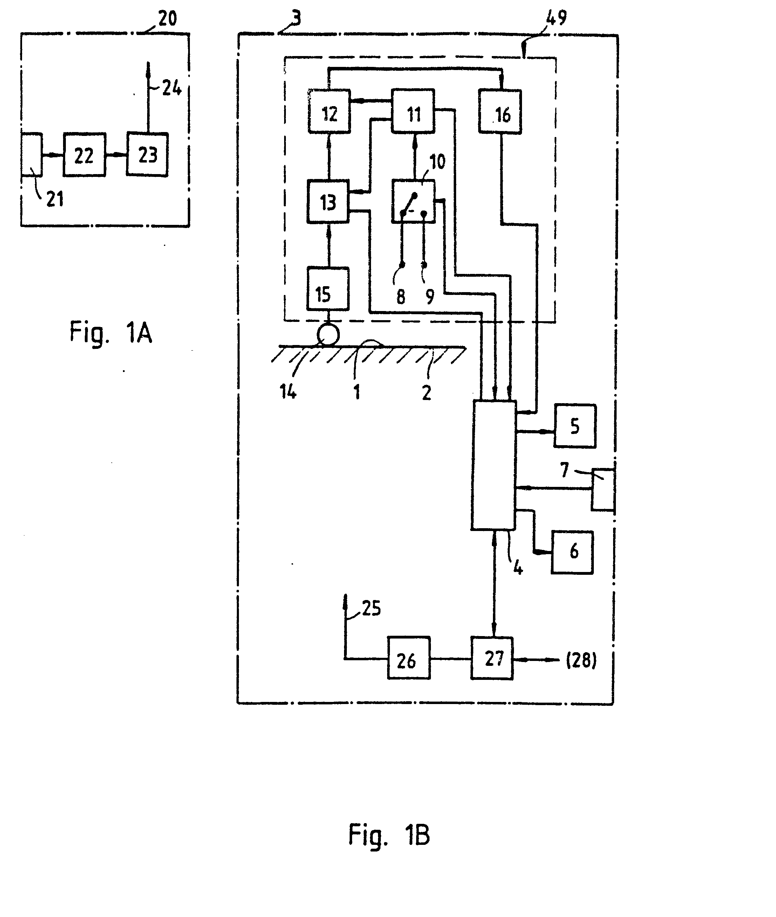

Die in Figur 1B durch die strichpunktierte Linie 3 umfahrenen Teile sind in einem fahrerlosen Fahrzeug angeordnet.
Entsprechend sind auch weitere Fahrzeuge, die auf dem
gleichen Streckennetz fahren, ausgerüstet.

0211327
P 37 363   15.7.86*

Bei dem Steuerungssystem nach Figur 1 kann das zugehörige
Streckennetz imaginar oder real im Boden verlegt sein. Der
Null-Marker, der den Null-Punkt aller Strecken des
Streckennetzes bestimmt, ist jedoch real und in Figur 1
mit 1 bezeichnet. Er ist auf der in Figur 1 angedeuteten
Fahrbahn 2 in Form einer Farbmarke aufgetragen.

Mit 4 ist eine Steuerschaltung bezeichnet, die einen Lenkantrieb 5 und einen Fahrzeugantrieb 6 ansteuert. Mit dem
Fahrzeugantrieb 6 wird das Fahrzeug zur Vorwärtsfahrt oder
Ruckwartsfahrt angetrieben, mit dem Lenkantrieb 5 wird die
Steuerung der steuerbaren Rader des Fahrzeuges angetrieben. Mit 7 ist ein von außen zugängliches Bedienungspult
bezeichnet, zu dem auch außen am Fahrzeug angebrachte
Fuhl- und Tastorgane gehören. Mit dem Bedienungspult 7
kann die Steuerschaltung 4 angesteuert werden und sie kann
mit einem Fahrprogramm beaufschlagt werden. Dieses Fahrprogramm enthält das imaginäre Streckennetz und imaginäre
Markierungspunkte, die bestimmten Positionen dieses
Streckennetzes zugeordnet sind.

Mit 8 und 9 sind zwei Markertaster bezeichnet, die unten
am Fahrzeug in einer Position angeordnet sind, in der sie
die neben der Fahrstrecke angeordneten Null-Marker 1 und
weitere Marker, die überfahren werden, abtasten können.
Die Markertaster arbeiten berührungslos. Sie können optisch, elektrisch, magnetisch oder auf Ultraschallbasis
abtastend ausgebildet sein. Die Marker sind dann entsprechend ausgebildet. Bei einem optisch ausgerüsteten Markertaster genügt ein Farbfleck als Marker auf der Fahrbahn.
Der Markertaster 8 ist für Vorwärtsfahrt, der Markertaster
9 für Rückwärtsfahrt, die Umschaltung erfolgt in einem
Markerschalter 10, angesteuert von der Steuerschaltung 4.
Die Signale der Markertaster gelangen in einen Decoder 11,
der den Markertastern nachgeschaltet ist. Die einzelnen
Marker sind unter Umständen unterschiedlich ausgestaltet,

zum Beispiel können sie sich geometrisch oder farblich
unterscheiden, so daß die Markertaster entsprechend unterschiedliche Tastsignale erzeugen. Diese unterschiedlichen
Tastsignale werden in dem Decoder 11 zu entsprechend unterschiedlichen Steuersignalen decodiert. Diese Steuersignale gelangen an die Steuerschaltung 4, an eine Fehlerschaltung 12 und an einen Wegzähler 13.

Die Markerschaltung 10, der Decoder 11, die Fehlerschaltung 12, der Wegzähler 13, der Zählimpulsgeber 15 und die
Grenzwertschaltung 16 bilden eine Wegzähleinrichtung 49.

Der Wegzähler 13 ist an ein Zählrad 14 angeschlossen, das
beim fahrenden Fahrzeug auf der Fahrbahn 2 mit der Fahrgeschwindigkeit des Fahrzeuges rollt. Bei dem Zählrad kann
es sich zum Beispiel um ein tragendes Rad des Fahrzeugs
handeln oder um ein gesondertes, nachgezogenes Zählrad,
wie es beispielsweise weiter unten anhand von Figur 6 noch
erläutert wird.

Das Zählrad 14 treibt einen Zählimpulsgeber 15, der daraufhin Zählimpulse in Abhängigkeit von dem abgerollten
Weg erzeugt, die an den Wegzähler 13 gelangen. Der Wegzähler 13 wird von dem von dem Null-Marker 1 ausgelösten
Markersignal auf Null gesetzt und zählt dann weiter. Das
Streckennetz ist so angelegt, daß alle Strecken über diesen gemeinsamen Null-Marker 1 führen.

An den einzelnen Strecken sind weitere, bestimmter Zählung
zugeordnete Kontrollmarker angebracht, die, wenn sie überfahren werden, ein Kontrollmarkersignal abgeben, das in
dem Decoder 11 einer ganz bestimmten Zählung des Wegzählers zugeordnet wird. Dieses Kontrollmarkersignal gelangt
in den Wegzähler und schaltet ihn auf die betreffende
Zählung um. Auf diese Weise werden Zählfehler laufend ausgeglichen. Die jeweilige Ist-Zählerstellung des Wegzählers

P 37 363  0211327  15.7.86*

und die sich aus den betreffenden Kontrollmarkersignalen
ergebende Soll-Zählerstellung werden in der Fehlerschaltung 12 verglichen und aus der Differenz wird ein Differenzsignal abgeleitet, das an eine Grenzwertschaltung 16
gelangt. Wenn das Grenzwertsignal einen bestimmten, der
Grenzwertschaltung 16 eingeprägten Wert überschreitet,
löst die Grenzwertschaltung ein Fehlersignal aus, das an
die Steuerschaltung 4 gelangt, die daraufhin den
Fahrzeugantrieb 6 abschaltet. Auf diese Weise wird die
Zählung des Wegzählers ständig überprüft, kleine Fehler
werden korrigiert und bei größeren Fehlern erfolgt ein
Eingriff, im Beispiel Abschaltung des Antriebs. Die
Zählerstellung des Wegzählers 13 wird in die
Steuerschaltung 4 eingesteuert, so daß dort aufgrund der
Zählerstellung die Position des Fahrzeuges auf der jeweils
vorgegebenen Strecke bekannt ist.

Mit der bis jetzt beschriebenen Ausrüstung kann das Fahrzeug einem in die Steuerschaltung 4 eingegebenen Programm
folgen und auf einem imaginären Streckennetz fahrerlos
fahren. Die nachfolgend zu beschreibenden Teile dienen zur
Steuerung mehrerer Fahrzeuge auf dem gleichen Streckennetz
unter der Regie einer Zentrale.

Die für alle diese Fahrzeug gemeinsame Zentrale ist in
Figur 1A dargestellt und mit den durch die strichpunktierte Linie 20 umfahrenen Teilen bestückt. Dazu gehört ein
von außen bedienbares Bedienungspult 21, das ein Steuergerät 22 ansteuert. Dieses Steuergerät erzeugt aufgrund eines vorgegebenen Programms Befehle und empfängt Informationen von den einzelnen Fahrzeugen. Zur Kommunikation mit
den einzelnen Fahrzeugen dient eine Funkstrecke, es sind
aber auch andere Übermittlungswege möglich. Mit 23 ist ein
an das Steuergerät 22 angeschlossener Sender/Empfänger bezeichnet, dessen zugehörige Antenne mit 24 bezeichnet ist.

- 20 -

An jedem Fahrzeug ist eine Antenne 25 angeordnet, die zu einem Sender/Empfänger 26 gehört. An den Sender/Empfänger ist ein Steuergerät 27 angeschlossen, das von der Steuerschaltung 4 und von Funktionseinheiten 28 des betreffenden Fahrzeugs Informationen erhält und auch an diese Informationen abgeben kann. Die Informationen der Steuerschaltung 4 und der Funktionseinheiten 28 betreffen unter anderem den jeweiligen Wegzahlerstand, das Vorliegen eines Fehlersignals an der Grenzwertschaltung 16, die in der Steuerschaltung ausgewählte Fahrstrecke und die Zustände der einzelnen Funktionseinheiten. Diese Informationen werden in einem Speicher des Steuergerätes 27 digital abgespeichert und können von dort über ein von der Zentrale ausgesendetes Abfragesignal abgefragt werden. Das Abfragesignal oder ein Befehl der Zentrale wird durch ein Adressenwort codiert, das dem betreffenden Fahrzeug eindeutig zugeordnet ist, so daß immer nur das eine von der Zentrale angesprochene Fahrzeug auf das Abfragesignal beziehungsweise den Befehl antwortet. In entsprechend umgekehrter Weise gibt ein Fahrzeug seine Nachricht an die Zentrale, die durch ein dem betreffenden Fahrzeug eindeutig zugeordnetes Adressenwort derart gesichert ist, daß jede von der Zentrale empfangene Nachricht dem absendenden Fahrzeug eindeutig zugeordnet werden kann.

Die Ausgestaltung der Fahrzeuge und des Zählrades für das im Zusammenhang mit Figur 1 beschriebenen Ausführungsbeispiel kann wie in Figur 4 bis 6 dargestellt und im zugehörigen Text nachfolgend beschrieben erfolgen. Die Fahrzeuge gemäß Figur 4 und 5 sind mit nach unten gerichteten Antennen ausgestattet. Diese wird man für das Ausführungsbeispiel nach Figur 1 möglicherweise nach oben richten und außerdem braucht man für das Ausführungsbeispiel nach Figur 1 nicht die an den Fahrzeugen nach Figur 4 und 5 vorgesehenen Führungstaster.

0211327
P 37 363   15.7.86*

Anhand der Figur 3 wird nun ein Ausführungsbeispiel beschrieben, bei dem das Streckennetz ein Führungsnetz 50 ist, das gebildet ist durch Führungsdrähte 52, 53, 54, die in einer Ebene parallel zur Fahrbahn 51, wenige Zentimeter unterhalb der Fahrbahn in den Boden verlegt sind. Die Führungsdrähte sind an eine Zentrale 55 angeschlossen. Die Zentrale weist einen Führungsstromgenerator 56 auf, der ausgangsseitig an die Führungsdrähte angeschlossen ist und diese mit einem Führungswechselstrom beaufschlagt.

Die Teile, die in Figur 3 durch die strichpunktierte Linie 58 umfahren sind, gehören zur Zentrale 55. Die Teile, die in Figur 3 durch die strichpunktierte Linie 57 umfahren sind, gehören zu einem Fahrzeug 60. Andere Fahrzeuge, die auf dem gleichen Streckennetz fahren, sind genauso ausgerüstet, ihnen ist nur ein anderes Adressenwort zugeordnet.

Ein Fahrzeug, zum Beispiel das Fahrzeug 60, weist wie jedes andere auf diesem Führungsnetz 50 betriebene Fahrzeug einen Führungstaster 61 auf, der mindestens zwei Induktionsspulen 63, 64 aufweist, die koaxial nebeneinander angeordnet sind, und zwar mit einer Achsrichtung parallel zur Fahrbahn und senkrecht zur Fahrtrichtung. Der Führungstaster 61 ist an eine der Steuerschaltung 4 aus Figur 1 entsprechende Steuerschaltung 65 angeschlossen, die eine dem Führungstaster 61 nachgeordnete Auswertschaltung 66 aufweist. Statt der Induktionsspulen 63 und 64 können auch anders ausgestaltete Magnetfeldtaster vorgesehen sein.

Das Führungsnetz 50 verzweigt sich, und zwar an Weichen 88, 89. Die verzweigten Führungsdrähte sind sämtlichst über einen Kondensator 82, 83, 84 zur Masse abgeschlossen. Die betreffenden Leitungsabschnitte, in denen die Kondensatoren liegen, sind fast rechtwinklig gegenüber dem Führungsdraht abgeknickt, so daß von diesen Leitungsabschnitten keine die Induktionsspulen 63, 64 störende Induktion

0211327

P 37 363   15.7.86*

ausgehen kann. Durch die Abschlüsse werden zwei weitere
Weichen 85, 86 und ein Übergang 87 gebildet. Die dadurch
entstehenden Lücken sind so klein, daß das Fahrzeug induktiv geführt darüberfahren kann. Beim Überfahren der Weichen wird der Führungstaster entsprechend der gewünschten
Fahrtrichtung umgeschaltet. Diese Umschaltung kann entweder erfolgen, indem ein anderes in der Zeichnung nicht
dargestelltes Induktionsspulenpaar oder weitere andere Induktionsspulen eingeschaltet werden, oder indem der Führungstaster in seiner Lage am Fahrzeug räumlich verschoben
wird. Bei Vorwärtsfahrt gemäß Pfeil 105 bilden die Weichen
88, 89 Verzweigungen und die Weichen 85, 86 Einmündungen.
Bei Ruckwärtsfahrt ist es umgekehrt.

Während der Fahrt richtet sich das Fahrzeug immer so aus,
daß die beiden Induktionsspulen 63, 64 den jeweils angesteuerten Führungsdraht 52 in die Mitte nehmen. In den
beiden Induktionsspulen 63, 64 werden durch den Führungswechselstrom des Führungsstromgenerators 56 über den angesteuerten Führungsdraht 52 Führungswechselströme erzeugt,
aus denen in der Auswertschaltung 66 ein Lenksignal abgeleitet wird, das an den dem Lenkantrieb 5 aus Figur 1
entsprechenden Lenkantrieb 67 gelangt, wodurch das Fahrzeug entlang einer ausgewählten Strecke des Führungsnetzes
50 selbsttätig gesteuert wird.

In dem Fahrzeug 60 ist eine der Wegzähleinrichtung 49 entsprechende Wegzähleinrichtung 70 installiert, die genauso
ausgerüstet ist und betrieben wird wie die Wegzähleinrichtung 49 aus Figur 1. Mit 71 ist ein dem Zählrad 14 entsprechendes Zählrad bezeichnet, das über den Zählimpulsgeber 72 an den Wegzähler 73 angeschlossen ist. Mit 78, 79
sind zwei Markertaster bezeichnet, die entsprechend wie
die Markertaster 8 und 9 an den Markerschalter 77 angeschlossen sind. Außerdem ist eine Fehlerschaltung 74, ein
Decoder 75 und eine Grenzwertschaltung 76 vorgesehen. Mit

0211327
P 37 363 15.7.86*

80 ist eine Null-Markierung und mit 81 die Fahrbahn bezeichnet. Die Wegzähleinrichtung 70 ist genauso ausgebildet wie die Wegzähleinrichtung 49 und arbeitet in Zusammenhang mit dem Zählrad 71 und den Markertastern 78, 79
mit der Steuerschaltung 65 zusammen entsprechend wie im
Text zu Figur 1 für die Wegzähleinrichtung 49 und die
Steuerschaltung 4 erläutert.

Die beiden Markertaster 78, 79 sind in der vertikalen
Langsmitte unten am Fahrzeug angeordnet, und zwar der Markertaster 78 für die Vorwärtsfahrt gemäß Pfeil 90 rechts
neben der Längsmitte und der Markertaster 79 für die
Rückwärtsfahrt links neben der Längsmitte. Die Markertaster werden entsprechend der gewählten Fahrtrichtung im
Markerschalter 77 einzeln eingeschaltet. Sie sind auf den
neben der Fahrbahn angeordneten Null-Marker 80 und weitere
Kontrollmarker 91 bis 98 gerichtet, denen ganz bestimmte
Zahlungen des Wegzählers zugeordnet sind, durch die, wie
im Text zu Figur 1 erläutert, der Zählerstand des Wegzählers 73 korrigiert und gegebenenfalls ein Fehlersignal
ausgelöst werden kann. Bei diesen Markern handelt es sich
um Farbflecken auf der Fahrbahn und die Markertaster sind
entsprechend optisch ausgerüstet.

Das Fahrzeug 60 ist zweiachsig und vierradrig. Die Räder
101, 102 der vorderen Achse 103 sind lenkbar durch den
Lenkantrieb 67. Die lenkbare Radachse 103 ist um die vertikale Achse 104 schwenkbar. Mit der Radachse schwenkt der
an der Radachse befestigte Führungstaster 61, so daß die
gemeinsame Achse 110 der beiden Induktionsspulen 63, 64
immer rechtswinklig zur angesteuerten Fahrtrichtung steht.
Wenn die lenkbare Radachse 103 insgesamt nicht schwenkbar
ist sondern nur die Räder 101, 102 entsprechend lenkbar
sind, dann ist der Führungstaster 61 an einem entsprechenden Gestänge angebracht, durch das er im selben Winkel wie
die Räder geschwenkt wird.

In der Fahrzeugmitte ist unten am Fahrzeug das Zählrad 71 gelagert. Das Zählrad ist drehbar um die Radachse 100 in einer Gabel 111 gelagert. Die Gabel 111 ist schwenkbar um eine vertikale Schwenkachse 112 an einem Drehteller 113 gelagert. Der Drehteller 113 ist schwenkbar um eine vertikale Achse 114 unten am Fahrzeug in einem Schwenklager 99 gelagert. Die Gabel 111 stützt sich über eine Druckfeder 115 am Drehteller 113 ab. An der Gabel 111 ist der Zählimpulsgeber 72 angeordnet, der bei jeder Umdrehung des Zählrades eine Folge von fünfundzwanzig Zählimpulsen erzeugt. Das Zählrad 71 läuft also ohne Tragfunktion mit und wird durch die Rückstellkraft der Feder 115 in ständigem, hinreichenden Kontakt mit der Fahrbahn 81 gehalten. Die Gabel 111 und damit auch die Radachse 100 wird immer nachgezogen gegenüber der Schwenkachse 112. Bei jeder Kurve schwenkt der Drehteller entsprechend, so daß die Gabel 111 immer nach hinten weist und das Zählrad ohne zu radieren sauber auf der Fahrbahn rollt. Diese Lagerung des Zählrades 71 ist vorzugsweise nur für Vorwärtsfahrt vorgesehen. Für ein Fahrzeug, das auch mit Rückwärtsfahrt betrieben wird, empfiehlt sich eine andere, gegebenenfalls abgeänderte Lagerung des Zählrades 71, bei der sichergestellt ist, daß das Zählrad bei Rückwärtsfahrt rückwärts rollt. An das Zählrad wird dann ein vorwärts und rückwärts zählender Wegzähler angeschlossen, so daß sich zwischen Wegzählerstand und Stand des Fahrzeuges auf der Strecke eine eindeutige Beziehung ergibt, ohne daß man wegen der Rückwärtsfahrt Umrechnungen vornehmen muß.

Die Steuerschaltung 65 wird bedient durch ein dem Bedienungspult 7 entsprechendes Bedienunspult 120 und steuert auch den Fahrzeugantrieb 121. Die Fahrbewegung des Fahrzeugs auf dem Führungsnetz 50 kann aufgrund der bis jetzt beschriebenen Teile nach einem in der Steuerschaltung 65 vorliegenden Programm erfolgen unter Berücksichtigung der Steuerimpulse aus der Wegzähleinrichtung 70. Es ist aber auch möglich, die diversen Fahrzeuge, die auf dem Führungsnetz 50 fahren, zusätzlich von der Zentrale 55 aus zu fuhren. Die dazu erforderliche Kommunikation kann bei diesem Ausführungsbeispiel unter Ausnutzung des Führungsleiters erfolgen. Die Informationsübermittlung von der Zentrale 55 zu den einzelnen Fahrzeugen erfolgt digitalisiert durch Umtastung der Frequenz $\bar{F}$ des Führungswechselstroms. Fur den Führungswechselstrom gilt F = 5,6 kHz. Für eine digitale "0" wird die Frequenz F um 500 Hz niedriger getastet auf 5,1 kHz und für eine digitale "1" wird die Frequenz F hoher getastet auf 6,1 kHz.

Die Schwingkreise der Induktionsspulen 63, 64 eingangsseitig an der Auswertschaltung 66 sind so weit gedämpft auf die Führungswechselstromfrequenz F abgestimmt, daß die Auswertung durch diese Tastung nicht gestört wird. An die eine Induktionsspule 64 ist ein Frequenzdiskriminator 122 angeschlossen, der die durch Frequenzumtastung aufgeprägten Digitalsignale zurückgewinnt und an ein dem Steuergerät 27 entsprechendes Steuergerät 123 weiterleitet. Das Steuergerät 123 steuert entsprechend wie das Steuergerät 27 Funktionseinheiten 150 an und nimmt von diesen Funktionseinheiten auch Signale auf, die die jeweilige Funktion der Funktionseinheit kennzeichnen und gegebenenfalls an die Zentrale weitergemeldet werden sollen. Eine entsprechende Informationsverbindung besteht auch zwischen der Steuerschaltung 65 und dem Steuergerät 123.

Auf Seiten der Zentrale ist ein Steuergerät 130 vorgesehen, das von einem Steuerpult 132 bedient werden kann. Das Steuergerät steuert mit der digitalisierten auszusendenden Nachricht einen Frequenzumschalter 131 an, der die Frequenz des Führungsstromgenerators 56 entsprechend umtastet.

Für die Nachrichtenübermittlung von einem Fahrzeug zur
Zentrale ist ein Sender 135 vorgesehen, der an das Steuergerät 123 angeschlossen ist und mit einer Sendefrequenz f
tastet, die fünf bis zehn mal so hoch ist wie die Frequenz
F des Führungswechselstroms. Diese Sendefrequenz f wird
entsprechend der zu sendenden Digitalnachricht ein- und
ausgetastet.

Es sind am Fahrzeug zwei Sendeantennen 136, 137 vorgesehen, die in der vertikalen Längsmittelebene angeordnet
sind, und zwar die eine Sendeantenne 137 vorn am Fahrzeug
und die andere 136 hinten am Fahrzeug, so daß mindestens
immer eine dieser Antennen dem Führungsdraht 52 gegenübersteht, auch dann wenn eine der Lücken, zum Beispiel die
bei der Weiche 86 überfahren wird. Die Sendefrequenz f
wird über das Führungsnetz 50 an die Zentrale übertragen
und gelangt dort vom Führungsdraht 52 unter Zwischenschaltung eines auf die Signalfrequenz abgestimmten Filters 139
in einen Empfänger 140, dem ein Decodierer 141 nachgeordnet ist, der die empfangenen Digitalsignale an das
Steuergerät 130 weitermeldet.

Auf dem Führungsnetz 50 können mehrere Fahrzeuge unabhängig voneinander fahren, die genauso ausgerüstet sind wie
das Fahrzeug 60. Jedem dieser Fahrzeuge ist aber ein besonderes Adressenwort zugeordnet. Alle Nachrichten der
Zentrale, die nicht durch das zugehörige Adressenwort
adressiert sind, werden von den Fahrzeugen ignoriert, und
die Zentrale erkennt dasjenige Fahrzeug, das eine eingehende Nachricht abgesandt hat, an dem zugehörigen, jeweils
mitgesendeten Adressenwort. Die Zentrale kann den Fahrzustand und auch den Funktionszustand der einzelnen Fahrzeuge mit Hilfe des Kommunikationssystems überwachen. Sie
kann insbesondere Kollisionen verhindern.

Zur Kollisionsverhinderung an einer Einmündung muß vor

jeder Einmündung ein Halteplatz bestimmt sein. Sobald der Zählerstand des Wegzählers die dem Halteplatz entsprechende Zählung erreicht hat, schaltet die Steuerschaltung 65 den Fahrzeugantrieb 121 aus, bis von der Zentrale ein Durchfahrbefehl vorliegt, worauf dann die Steuerschaltung 65 den Fahrzeugantrieb 121 wieder einschaltet. Die Zentrale erteilt den Durchfahrbefehl dann und nur dann, wenn die übrigen Fahrstrecken der betreffenden Einmündung frei sind. Ein solcher Halteplatz kann durch einen Kontrollmarker definiert sein, er kann aber auch durch einen beliebigen Wegzählerstand definiert sein. Es empfiehlt sich, an Stellen des Streckennetzes, an denen es auf eine genaue Stellung des Wegzählers ankommt, einen Kontrollmarker anzuordnen oder in unmittelbarer Nähe davor - unbedingt nötig ist das allerdings nicht.

Zur Vermeidung von Auffahrunfällen kann die Zentrale den jeweiligen Standort von hintereinander auf der gleichen Fahrstrecke fahrenden Fahrzeugen überwachen. Sie überwacht dabei auch ständig den Wegzählerstand der hintereinander fahrenden Fahrzeuge und kann dann bei Unterschreiten einer vorbestimmten Differenz des Zählerstandes das hinterherfahrende Fahrzeug vorübergehend zu einer langsameren Fahrgeschwindigkeit umsteuern oder anhalten und auf die Weise Kollisionen verhindern.

In Abänderung der Figur 2 sind nach Figur 2 A die Kondensatoren 82, 83, 84 durch Filter, zum Beispiel das Filter 82' ersetzt. Dieses Filter besteht aus einem Kondensator, dem ein Widerstand mit einer Induktivität in Reihe parallel geschaltet ist. Der Widerstand ist so bemessen, daß bei der Signalfrequenz (zum Beispiel 50 kHz - 1 kHz ist gleich 1000 Schwingungen pro Sekunde - ) das Filter den Führungsdraht mit Wellenwiderstand abschließt. Die Induktivität ist so bemessen, daß das Filter bei der verwendeten Führungsfrequenz (zum Beispiel 5,6 kHz) einen

0211327
P 37 363  15.7.86*

induktiven Widerstand darstellt, der den auf dem
Führungsdraht fließenden Führungsstrom einstellt (zum Beispiel bei konstanter Speisespannung von 10 V des Führungsstromgenerators ist hier ein Scheinwiderstand von Spule
und Widerstand von 100 Ohm für einen Führungsstrom von 100
mA notwendig). Der Zentrale 55' und dem Führungsnetz 50'
ist ein Parallelfilter 59 zwischengeschaltet.

Das System kann betrieben werden mit einer einzigen
Führungsfrequenz für alle Fahrzeuge, dann muß man den Fahrzeugen, wenn sie in eine Verzweigung einfahren, einen
Befehl erteilen, auf welchem Zweig der Verzweigung sie
weiterfahren sollen. Man kann aber auch für jede Strecke
eine besondere Führungsfrequenz vorsehen und jedes Fahrzeug durch Abstimmung oder Umschaltung des zugehörigen
Führungstasters auf die ausgewählte Strecke steuern. Für
diesen Fall ist nach Figur 3 der Führungstaster durch den
Umschalter 68 auf die verschiedenen Führungsfrequenzen umschaltbar und der Umschalter 68 ist ansteuerbar über die
Steuerleitung 69 durch die Steuerschaltung 65.

Das Streckennetz 230 aus Figur 7 besteht aus mehreren
Strecken, die durch strichpunktierte Linien angezeigt
sind, und zwar aus einer geschlossenen Strecke 231 und
zwei Abzweigen 232 und 233, die wieder in die geschlossene
Strecke 231 einmünden. In dem Streckennetz sind insgesamt
vier Führungsleiterabschnitte 234, 235, 236, 237 verlegt,
und zwar in einer Ebene planparallel zur horizontalen
Fahrbahn 238 und in Richtung sowie entlang der
betreffenden Strecke. Die Führungsleiterabschnitte 234 bis
237 sind elektrisch leitende Drähte, die mit einem Abstand
von etwa 3 cm (Zentimeter) unterhalb der Fahrbahn in dem
Boden verlegt sind. Die Führungsleiterabschnitte sind über
das elektrische Leitungsnetz 239 an eine Zentrale 255
angeschlossen, und zwar an einen Führungsstromgenerator
256, wie aus Figur 8 ersichtlich, von dem sie mit einem Fuhrungsstrom beaufschlagt werden.

Den einzelnen Führungsleiterabschnitten 234 bis 237 ist je
eine Bezugsmarke 240 bis 243 räumlich zugeordnet. Eine solche Bezugsmarke kann aus einem auf die Fahrbahn 238 gezeichneten Farbfleck bestehen oder aus einer auf die Fahrbahn aufgeklebten metallischen Scheibe. Wesentlich ist,
daß diese Bezugsmarke von einem am Fahrzeug 260 -
vergleiche Figur 8 - angeordneten Markertaster 278
aufgefaßt werden kann. Der Markertaster 278 arbeitet berührungslos, er kann optisch, elektrisch, magnetisch oder auf
Ultraschallbasis abtastend ausgebildet sein. Die Bezugsmarke ist dann entsprechend ausgebildet.

Ein Führungsleiterabschnitt 234 - 237 hat mindestens eine
mit Toleranzzugabe für die Lenkungskorrektur des maximal
zulässigen Kursfehlers gerade ausreichende Länge und der
Abstand zwischen zwei der gleichen Strecke hintereinander
zugeordneten Führungsleiterabschnitten 234, 236 ist mit
Toleranzabzug so groß, daß der maximal zulässige Kursfehler bis zum jeweils nächsten Führungsleiterabschnitt
normalerweise nicht überschritten wird.

Es sind fahrerlose Fahrzeuge vorgesehen, die entlang vorbestimmter, individueller Strecken des Streckennetzes fahren sollen. Im Beispiel handelt es sich um die Strecken
beziehungsweise Abzweige 231, 232, 233. Die Fahrzeuge
fahren fahrerlos nach einer vorgegebenen Fahrroutine
entlang der ausgewählten Strecke, wobei der Kurs gesichert
wird durch die Führungsleiterabschnitte und Bezugsmarken.
Wie das im einzelnen geschieht, wird insbesondere anhand
der Figur 8 erläutert.

Figur 9 zeigt eine andere Ausgestaltung eines Führungsleiterabschnittes. Der Führungsleiterabschnitt 244, der entlang des Streckenabschnittes 250 verlegt ist, besteht aus einer Reihe von Permanentmagneten 245 bis 247, die quer
zum Streckenabschnitt magnetisiert sind. Die Permanentmagneten sind, wie aus Figur 10 ersichtlich, nach Art
einer Schraube ausgebildet und in einen in die Fahrbahn
229 eingelassenen Dübel 248 eingeschraubt.

Die Führungsleiterabschnitte 234 bis 237 aus Figur 7 und
der Führungsleiterabschnitt 244 aus Figur 9 erzeugen über
der Fahrbahn ein Magnetfeld, das von einem als Magnetfeldtaster ausgebildeten Führungstaster 261, der an jedem
Fahrzeug angebracht ist, aufgefaßt werden kann. Durch das
aufgefaßte Magnetfeld werden vom Führungstaster Lenkungskorrektursignale erzeugt in Abhängigkeit von der
Abweichung des tatsächlich gefahrenen Kurses gegenüber dem
durch den Führungsleiterabschnitt vorgegebenen Kurs, aus
dem dann Korrekturbefehle für die Lenkung des betreffenden
Fahrzeuges abgeleitet werden.

Jeder Führungsleiterabschnitt 234 - 237 beziehungsweise
244 ist mit Toleranzzugabe für eine Lenkungskorrektur
eines maximalen Kursfehlers ausreichend lang bemessen, so
daß, wenn ein Fahrzeug mit maximalem Kursfehler an einen
solchen Führungsleiterabschnitt heranfährt, der Kursfehler
korrigiert wird, während das Fahrzeug das Magnetfeld des
Führungsleiterabschnittes auffaßt. Der Abstand zwischen
zwei der gleichen Strecke hintereinander zugeordneten
Führungsleiterabschnitten, also zum Beispiel der Abstand
zwischen den Führungsleiterabschnitten 234 und 236, ist
mit Toleranzabzug so groß bemessen, daß der maximal
zulässige Kursfehler bis zum jeweils nächsten Führungsleiterabschnitt normalerweise nicht überschritten wird.
Ein solcher Kursfehler kann entstehen durch Toleranzen bei
der Lenkungssteuerung, bei der Lenkung, bei der Antriebssteuerung und beim Antrieb. Ein Kursfehler kann auch durch
Unebenheiten in der Fahrbahn entstehen. Es sind auch außergewöhnliche Situationen denkbar, bei denen zum Beispiel

0211327
P 37 363 15.7.86*

das Fahrzeug durch Kollision mit einem nicht zum System
gehörenden Gegenstand aus dem Kurs geworfen wird. Dann
kann ein Kursfehler entstehen, der größer ist als der
maximal zulässige Kursfehler. Dieser Kursfehler kann dann
vielleicht nicht mehr korrigiert werden. In einem solchen
Fall sind Vorkehrungen getroffen, daß das Fahrzeug seine
Fahrt unterbricht und diese Störung durch ein Signal gemeldet wird, zum Beispiel an das Aufsichtspersonal oder an
die Zentrale.

Die Teile, die in Figur 8 durch die strichpunktierte Linie
258 umfahren sind, gehören zur Zentrale 255. Die Teile,
die in Figur 8 durch die strichpunktierte Linie 257
umfahren sind, gehören zu einem Fahrzeug 260. Andere
Fahrzeuge, die auf dem gleichen Streckennetz fahren, sind
genauso ausgerüstet, ihnen ist nur ein anderes Adressenwort zugeordnet.

Ein Fahrzeug, zum Beispiel das Fahrzeug 260, weist wie
jedes andere auf dem Streckennetz 230 betriebene Fahrzeug
einen Führungstaster mit mindestens zwei Induktionsspulen
263, 264 auf, die koaxial nebeneinander angeordnet sind,
und zwar mit einer Achsrichtung parallel zur Fahrbahn und
senkrecht zur Fahrtrichtung. Der Führungstaster 261 ist an
eine Steuerschaltung 265 angeschlossen, die eine dem Führungstaster 261 nachgeordnete Auswertschaltung 266 aufweist. An die Steuerschaltung 265 ist ein Fahrroutinenspeicher 318 angeschlossen, in dem eine oder mehrere
Fahrroutinen abfragbar gespeichert sind, wobei eine
Fahrroutine aus Fahrroutinensignalen besteht, die die
Fahr- und Lenkbefehle und gegebenenfalls Befehle für
Funktionseinheiten für eine an einer Bezugsmarke
beginnende und an einer Bezugsmarke endende Fahrstrecke
enthalten. Anfang und Ende einer Fahrstrecke können durch
die gleiche oder auch verschiedene Bezugsmarken definiert
sein.

0211327
P 37 363  15.7.86*

In manchen Fällen genügt es, das Fahrzeug immer entlang
vorgegebener Fahrroutinen zu steuern und diese Fahrroutinen einzugeben. In manchen Fällen ist es aber wünschenswert, das Fahrzeug an ein ganz bestimmtes Ziel zu führen,
und für diesen Fall empfiehlt es sich, Vorkehrungen zu
treffen, damit das Fahrzeug selbsttätig auf einem optimalen Weg dieses Ziel ansteuert. Zu diesem Zweck ist dann in
der Steuerschaltung 265 neben dem Fahrroutinenspeicher
auch noch ein Zielparameterspeicher vorgesehen, der mit
dem Fahrroutinenspeicher zusammenwirkt und bei Eingabe von
Zielparametern, zum Beispiel über das Bedienungspult 320
oder über das Steuerpult 331, die einem bestimmten Fahrtziel zugeordnet sind, in einer gegebenenfalls gerade gefahrenen Fahrroutine dieses Ziel sucht und, wenn es gefunden wird, seine Ansteuerung auslöst, und, falls dieses
Ziel in der gerade gefahrenen Fahrroutine nicht vorliegt
oder gerade keine Fahrroutine gefahren wird, ein Anfahren
über anschließende Fahrroutinen optimiert sucht und ansteuert.

Statt der Induktionsspulen 263 und 264 können auch anders
ausgestaltete Magnetfeldtaster vorgesehen sein. Wenn die
Führungsleiterabschnitte kein Magnetfeld erzeugen, sondern
anders berührungslos abtastbar sind, zum Beispiel optisch
oder mit Ultraschall, dann sind statt der Magnetfeldtaster
entsprechend andere Taster vorgesehen, die den Führungsleiterabschnitt und dessen Ausrichtung im Raum erkennen
können.

Während das Fahrzeug nach der Fahrroutine fährt, ist der
Führungstaster weitgehend funktionslos. Erst wenn die Induktionsspulen 263 und 264 eines Führungstasters das
Magnetfeld eines Führungsleiterabschnittes 234 bis 237
auffassen, werden von dem Führungstaster Führungssssignale
erzeugt, die an die Steuerschaltung gelangen und dort

Lenkungskorrektursignale auslösen in Abhängigkeit von der
Abweichung des tatsächlich gefahrenen Kurses gegenüber dem
durch den Führungsleiterabschnitt vorgegebenen Kurs. Aus
den Korrekturbefehlen werden Befehle für die Lenkung
abgeleitet, und zwar so lange bis die beiden Induktionsspulen 263, 264 den betreffenden Führungsleiterabschnitt,
zum Beispiel den Führungsleiterabschnitt 237, in die Mitte
nehmen. Das entspricht dann dem gewünschten Kurs des
Fahrzeugs. Der Lenkantrieb 267 für das Fahrzeug ist an die
Steuerschaltung 265 angeschlossen.

In dem Fahrzeug 260 ist eine Wegzähleinrichtung 270 installiert. Zu der Wegzähleinrichtung 270 gehört ein Zählrad
271, das über den Zählimpulsgeber 272 an einen Wegzähler
273 angeschlossen ist. Mit 278 ist ein Markertaster
bezeichnet, der bei Überfahren einer Bezugsmarke 240 bis
243 beziehungsweise 249 ein Bezugsmarkensignal auslöst.
Dieses Bezugsmarkensignal gelangt über einen Decoder 275
an eine Fehlerschaltung 274. In der Fehlerschaltung 274
wird die Zählstellung des Wegzählers 273 mit dem
decodierten Bezugsmarkensignal verglichen und wenn das
decodierte Bezugsmarkensignal einem anderen Zählerstand
entspricht als der tatsächliche Zählerstand im Wegzähler
273 wird ein Fehlersignal erzeugt, die über eine
Grenzwertschaltung 266 an die Steuerschaltung 265 gelangt.
Außerdem wird der Wegzähler 273 durch das decodierte
Bezugsmarkensignal auf die diesem Bezugsmarkensignal
entsprechende korrekte Zählung umgeschaltet. Den einzelnen
Bezugsmarken sind ganz bestimmte Wegzählerstellungen
zugeordnet, auf die der Wegzähler beim Überfahren der
betreffenden Bezugsmarke korrigiert wird, wenn er eine
davon abweichende Zählung aufweist.

Es sind zweckmäßig Bezugsmarken vorgesehen, die ein eindeutig die betreffende Bezugsmarke kennzeichnendes Bezugsmarkensignal auslösen. Solche Bezugsmarken sind aufwendig.

Deshalb sind auch Bezugsmarken vorgesehen, die weniger aufwendig sind und nur ein neutrales Bezugsmarkensignal auslösen. Ein solches neutrales Bezugsmarkensignal wird dann mit einer im Fahrroutinenspeicher abgelegten, der Bezugsmarkenposition eindeutig zuordbaren Erwartung zur Auswertung verglichen.

Die Steuerschaltung kann bedient werden durch ein Bedienungspult 320 und steuert auch den Fahrzeugantrieb 321. Die Bewegung des Fahrzeuges auf dem Streckennetz 230 kann aufgrund der bis jetzt beschriebenen Teile nach einem in der Steuerschaltung 265 vorliegenden Programm erfolgen unter Berücksichtigung der Steuerimpulse aus der Wegzähleinrichtung 270 und unter Berücksichtigung der Steuersignale aus dem Führungstaster 261 beziehungsweise der Auswertschaltung 266.

In manchen Fällen ist es zweckmäßig, die Bewegung der einzelnen Fahrzeuge von der Zentrale 255 aus zu überwachen und gegebenenfalls zu steuern. Die dazu erforderliche Kommunikation kann bei diesem Ausführungsbeispiel unter Ausnutzung des Führungsnetzes 239 erfolgen. Die Informationsübermittlung von der Zentrale 255 zu den einzelnen Fahrzeugen erfolgt digitalisiert durch Umtastung der Frequenz F des Führungswechselstroms. Für den Führungswechselstrom gilt F = 5,6 kHz. Für eine digitale "0" wird die Frequenz F um 500 Hz niedriger getastet auf 5,1 kHz und für eine digitale "1" wird die Frequenz F höher getastet auf 6,1 kHz.

Die Schwingkreise der Induktionsspulen 263, 264 eingangsseitig an der Auswertschaltung 266 sind so weit gedämpft auf die Führungswechselstromfrequenz F abgestimmt, daß die Auswertung durch diese Tastung nicht gestört wird. An die eine Induktionsspule 264 ist ein Frequenzdiskriminator 322 angeschlossen, der die durch Frequenzumtastung aufgeprägten Digitalsignale zurückgewinnt und an ein Steuergerät 323 weiterleitet. Das
Steuergerät 323 steuert Funktionseinheiten 350 an und
nimmt von diesen Funktionseinheiten auch Signale auf, die
die jeweilige Funktion der Funktionseinheit kennzeichnen
und gegebenenfalls an die Zentrale weitergemeldet werden
sollen. Eine entsprechende Informationsverbindung besteht
auch zwischen der Steuerschaltung 265 und dem Steuergerät
323.

Auf Seiten der Zentrale ist ein Steuergerät 330 vorgesehen, das an einem Steuerpult 331 bedient werden kann. Das
Steuergerät steuert mit der digitalisierten, auszusendenden Nachricht einen Frequenzumschalter 332 an, der die
Frequenz des Führungsstromgenerators 256 entsprechend umtastet.

Für die Nachrichtenübermittlung von einem Fahrzeug zur
Zentrale ist ein Sender 335 vorgesehen, der an das Steuergerät 323 angeschlossen ist und mit einer Sendefrequenz f
tastet, die fünf bis zehn mal so hoch ist wie die Frequenz
F des Führungswechselstroms. Diese Sendefrequenz f wird
entsprechend der zu sendenden Digitalnachricht ein- und
ausgetastet.

Es ist am Fahrzeug eine Sendeantenne 336 vorgesehen, die
in der vertikalen Längsmittelebene des Fahrzeuges angeordnet ist. Diese Sendeantenne 336 ist, bezogen auf den korrekten Kurs, auf einen gerade überfahrenen Führungsleiterabschnitt, zum Beispiel den Führungsleiterabschnitt 234,
ausgerichtet. Die Sendefrequenz f wird über das Streckennetz 230 an die Zentrale übertragen und gelangt dort über
ein auf die Sendefrequenz f abgestimmtes Filter 342 an einen Empfänger 340, dem ein Decodierer 341 nachgeordnet
ist, der die empfangenen Digitalsignale an die Steuerschaltung 330 weitermeldet.

Auf dem Streckennetz 230 können mehrere Fahrzeuge unabhängig voneinander fahren, die genauso ausgerüstet sind wie das Fahrzeug 260. Jedem dieser Fahrzeuge ist aber ein besonderes Adressenwort zugeordnet. Alle Nachrichten der Zentrale, die nicht durch das zugehörige Adressenwort adressiert sind, werden von den Fahrzeugen ignoriert, und die Zentrale erkennt dasjenige Fahrzeug, das eine eingehende Nachricht abgesandt hat, an dem zugehörigen jeweils mitgesendeten Adressenwort.

Die Sende- und Empfangsbereitschaft eines Fahrzeuges 260 kann sichergestellt werden, sobald das Fahrzeug in hinreichende Nähe zu einem Führungsleiterabschnitt gerät. Die Sende- und Empfangsbereitschaft kann selbsttätig und/oder auf Abfrage seitens des Fahrzeuges gemeldet werden.

Die Zentrale kann den Fahrzustand und auch den Funktionszustand der einzelnen Fahrzeuge mit Hilfe des Kommunikationssystems überwachen. Sie kann insbesondere Kollisionen verhindern.

Bei dem System nach Figur 8 ist auch ein Lernbetrieb möglich. Zu diesem Zweck ist an die Steuerschaltung 265 ein Fahrroutinespeicher 218 angeschlossen, der eine oder mehrere Fahrroutinen abfragbar speichern kann. Eine Fahrroutine besteht aus Fahrroutinensignalen, die die Fahr- und Lenkbefehle und gegebenenfalls Befehle für Funktionseinheiten zum Betrieb des Fahrzeuges enthält, und zwar für eine bestimmte Fahrstrecke, die an einem Marker beginnt und an einem Marker endet. Aus einer solchen Fahrroutine erfährt die Steuerschaltung 265 sämtliche Befehle zum Abfahren dieser Strecke.

Das Programmieren der Fahrroutine erfolgt im sogenannten Lernbetrieb mit Hilfe des dann als Lernfahrzeug ausgebildeten Fahrzeugs 260. Dieses Fahrzeug weist einen
Lernsignalgenerator 319 auf, der an die Steuerschaltung
265 angeschlossen ist. Das Steuergerät ist durch den von
außen zur Handbedienung zugänglichen Umschalter 317 von
dem normalen Automatikbetrieb auf einen sogenannten
Lernbetrieb umschaltbar. Bei Lernbetrieb fährt das
Fahrzeug handgesteuert durch das Bedienungspult 320. Der
Lernsignalgenerator 319 erzeugt dann in Abhängigkeit von
den bei Handbetrieb über das Bedienungspult 320 hervorgerufenen Fahr- und Lenkbewegungen und Bewegungen der vorzugsweise vorgesehenen Funktionseinheiten Lernsignale.
Diese gelangen an den Fahrroutinenspeicher 318 und werden
dort in Fahrroutinensignale umgewandelt und als Fahrroutine abgespeichert.

Das Fahrzeug ist nun in der Lage, im Automatikbetrieb die
zunächst im Handbetrieb abgefahrene Strecke selbsttätig
nach Befehlen der Fahrroutine wiederholt abzufahren, wobei
man zweckmäßig im Fahrroutinenspeicher Vorkehrungen
trifft, daß die Fahrgeschwindigkeit und gegebenenfalls
auch die Geschwindigkeit der Bewegungen der Funktionseinheiten gegenüber dem Handbetrieb optimiert wird.

Mit der bis jetzt beschriebenen Ausrüstung kann das Fahrzeug einem in die Steuerschaltung 265 eingegebenen
Programm folgen und auf einem realen oder einem imaginären
Streckennetz fahrerlos fahren.

Die weiteren Fahrzeuge können genauso ausgebildet sein wie
das Lernfahrzeug, können also auch als Lernfahrzeug ausgerüstet sein, man kann aber bei den weiteren Fahrzeugen
auch auf den Lernsignalgenerator 319 verzichten und damit
auch auf den Umschalter 317, so daß die Steuerschaltung 4
immer auf Automatik-Betrieb stehenbleibt. Die Schaltung
aller Fahrzeuge des Systems ist so ausgerüstet, daß alle
Fahrzeuge die gleichen Befehle verarbeiten können. Man muß

P 37 363  **0211327**
15.7.86*

nun nur die im Lernbetrieb gewonnene Fahrroutine in den
dem betreffenden anderen Fahrzeuge zugehörigen Fahrroutinespeicher einspeichern und dann kann dieses Fahrzeug
die gleiche Strecke abfahren.

P 37 363   15.7.86*

**0211327**

Patentansprüche

1. Fahrerloses Transportsystem für mehrere fahrerlose
Fahrzeuge, die entlang vorbestimmter Strecken eines
Führungsnetzes geführt werden, dadurch gekennzeichnet,

daß jedes Fahrzeug ( 60 ) einen Wegzähler ( 13 ) aufweist, der in Abhängigkeit vom zurückgelegten Weg weitergezahlt wird,

daß jede Strecke ( 52, 53, 54, ) an einem Bezugspunkt
beginnt und an einem Bezugspunkt endet,

daß an jedem Bezugspunkt ein Marker ( 80 ) angeordnet
ist,

daß an jedem Fahrzeug eine Markertaste ( 78 ) angeordnet ist, der bei Überfahren eines Markers ein Markersignal auslöst,

daß der Markertaster an den Wegzähler angeschlossen ist
und durch das Markersignal den Wegzähler auf 0 oder einen
vorgegebenen Wert setzt, sofern er diesen Wert nicht
bereits innehat.

2. System nach Anspruch 1, dadurch gekennzeichnet,

daß eine an das Führungsnetz ( 50 ) angeschlossene
Zentrale ( 55 ) vorgesehen ist, von der die Fahrzeuge
( 60 ) kontrolliert und geführt werden,

daß zwischen den einzelnen Fahrzeugen einerseits und
der Zentrale andererseits eine für die Fahrzeuge individuelle Kommunikationsverbindung in beiden Richtungen
besteht,

daß zu dieser Kommunikationsverbindung auf jedem Fahrzeug ein Sender ( 26 ) gehört, der individuell von der
Zentrale fernbedienbar ist,

daß der Wegzähler ( 13 ) an den zugehörigen Sender
angeschlossen ist und daß der jeweilige Wegzählerstand oder ein darauf abgeleiteter Wert von der Zentrale abfragbar ist, oder in
Abhangigkeit vom Wegzählerstand im Fahrzeug von diesem an die Zentrale gesendet wird.

3. System nach einem der vorhergehenden Ansprüche, dadurch
gekennzeichnet,

daß das Führungsnetz ( 50 ) Verzweigungen ( 88, 89 ...)
und Einmündungen ( 85, 86 ) aufweist,

daß zur Kollisionsverhinderung vor jeder Einmündung ein
Halteplatz bestimmt ist,

daß jedes Fahrzeug bei Erreichen des Halteplatzes anhält, wenn nicht von der Zentrale ein Durchfahrbefehl vorliegt, und erst weiterfährt, wenn der Durchfahrbefehl vorliegt und

daß die Zentrale einen Durchfahrbefehl dann und nur
dann erteilt, wenn die übrigen Fahrstrecken der betreffenden Einmündung frei sind.

4. System nach einem der vorhergehenden Ansprüche, dadurch
gekennzeichnet,

daß jedes Fahrzeug ( 260 ) eine automatische Fahr- und
Lenksteuerschaltung aufweist, die von dem Wegzähler
( 270 ) und den Bezugsmarkensignalen angesteuert wird,

daß die Lenksteuerschaltung ( 65 ) aller Fahrzeuge auf
die gleiche Befehlsverarbeitung eingerichtet ist,

daß an jedem Fahrzeug ein Fahrzeugantrieb ( 321 ) und
ein Lenkantrieb ( 267 ) vorgesehen ist, der von der Fahr-
und Lenksteuerschaltung angesteuert wird,

daß mindestens eines der Fahrzeuge als Lernfahrzeug
ausgerüstet ist,

daß das Lernfahrzeug eine auf Handbetrieb umschaltbare
Fahr- und Lenksteuerschaltung ( 265 ) aufweist mit
zugehörigen, von außen zugänglichen Handhaben ( 317 ),

daß ein Fahrroutinenspeicher ( 318 ) vorgesehen ist, in
dem einer oder mehrere Fahrroutinen abfragbar speicherbar
sind,

daß eine Fahrroutine aus Fahrroutinesignalen besteht,
die die Fahr- und Lenkbefehle und gegebenenfalls Befehle

0211327

fur Funktionseinheiten für eine an einem Bezugsmarker
( 240 ) beginnende und an einem Bezugsmarker endende
Fahrstrecken enthalten, daß im Lernfahrzeug ein Lernsignalgenerator ( 319 )
vorgesehen ist, der in Abhängigkeit von den bei Handbetrieb hervorgerufenen Fahr- und Lenkbewegungen und
Befehlen für Funktionseinheiten Lernsignale erzeugt, aus
denen die zugehörigen Fahrroutinen gebildet werden können.


5. System nach einem der vorhergehenden Ansprüche, dadurch
gekennzeichnet,

daß ein Fahrroutinenspeicher ( 318 ) an jedem Fahrzeug
( 260 ) vorgesehen ist, der von dem Wegzähler ( 270 )
angesteuert wird und in dem ein oder mehrere Fahrroutinen
abfragbar speicherbar sind, wobei eine Fahrroutine aus
Fahrroutinensignalen besteht, die die Fahr- und Lenkbefehle und gegebenenfalls Befehle für Funktionseinheiten
für eine an einer Bezugsmarke ( 240 ) beginnende und an
einer Bezugsmarke ( 240 ) endende Fahrstrecke enthalten,

daß Führungsleiterabschnitte ( 234-237 ) in einer Ebene
planparallel zur Fahrbahn ( 229 ) in Richtung und entlang
der Strecken verlegt sind und

daß ein Führungstaster ( 261 ) an jedem Fahrzeug
( 260 ) vorgesehen ist, der beim Anfahren an einen
Führungsleiterabschnitt ( 234 ) ein Lenkungskorrektursignal erzeugt in Abhängigkeit der Abweichung des tatsächlich gefahrenen Kurses gegenüber dem durch den Führungsleiterabschnitt vorgegebenen Kurs, aus dem Korrekturbefehle für die Lenkung abgeleitet werden.


6. System nach einem der vorhergehenden Ansprüche, dadurch
gekennzeichnet,

daß das Führungsnetz ( 50 ) aus in einer Ebene parallel
zur Fahrbahn ( 81 ) verlegten Führungsdrähten ( 52 )
besteht,

daß in der Zentrale ( 55 ) ein Führungstromgenerator ( 56 ) angeordnet ist, der ausgangsseitig an die
Führungsdrähte angeschlossen ist und diese mit Führungswechselstrom beaufschlagt,

daß jedes Fahrzeug ( 60 ) einen Induktionsspulen
( 63, 64 ) aufweisenden, auf den jeweils angesteuerten
Führungsdraht ( 52 ) gerichteten auf den Führungswechselstrom abgestimmten Führungstaster ( 61 ) aufweist, und

daß dem Führungstaster eine Auswertschaltung ( 66 )
nachgeordnet ist, die aufgrund der im Führungstaster
induzierten Führungswechselströme ein Lenksignal erzeugt
zur Lenkung des Fahrzeuges entlang dem Führungsdraht.


7. System nach Anspruch 6, dadurch gekennzeichnet,

daß die Signalübermittlung von der Zentrale ( 55 ) zu
den Fahrzeugen ( 60 ) digitalisiert (0/1) erfolgt mit
einer Tastung der Frequenz F des dem betreffenden Fahrzeug
zugeordneten Führungswechselstroms auf digitale
"0"= F + DF und digitale "1" = F - DF, mit
DF = 0,05 F bis 0,10 F,

daß der Führungstaster ( 61 ) eingangsseitig gedämpft
ist auf mindestens eine auswertbare Bandbreite F +/- DF,
und

daß dem Führungstaster neben der Auswertschaltung
( 66 ) ein Empfänger ( 122 ) für die Digitalsignale der
Zentrale nachgeordnet ist.


8. System nach Anspruch 7, dadurch gekennzeichnet,

daß für Signalübermittlung von den Fahrzeugen ( 60 )
zur Zentrale ( 55 ) in jedem Fahrzeug ein Sender ( 135 )
angeordnet ist, für dessen Sendefrequenz W vorzugsweise
gilt: W = 5 F bis 20 F,

daß dieser Sender ausgangsseitig an eine Antenne
( 136, 137 ) angeschlossen ist, die auf den vom Fahrzeug
angesteuerten Führungsdraht ( 52 ) gerichtet ist,

daß die Signale digitalisiert dieser Sendefrequenz aufgeprägt werden, und

daß an der Zentrale ein Empfänger ( 140 ) vorgesehen ist, der unter Zwischenschaltung eines auf diese Signalfrequenz abgestimmten Filters ( 139 ) an den Führungsdraht ( 52 ) angeschlossen ist.

9. System nach einem der vorhergehenden Ansprüche, dadurch gekennzeichnet,

daß für jede Strecke eine besondere Führungsfrequenz vorgesehen ist und

daß ein Fahrzeug ( 60 ) durch Abstimmung oder Umschaltung des zugehörigen Führungstasters ( 61 ) auf eine ausgewählte Strecke steuerbar ist.

10. System nach einem der vorgehergehenden Ansprüche, dadurch gekennzeichent,

daß das Führungsnetz ( 50, 50' ) ausgehend von einem Fuhrungsleiteranfang ( 80, 80' ) sich elektrisch zu mehreren Führungsleiterstrecken ( 53, 54 ) verzweigt,

daß der Führungsleiteranfang elektrisch an den einen Führungsstromausgangspol des Führungsstromgenerators ( 55, 55' ) angeschlossen ist,

daß die offenen Enden aller Führungsleiterstrecken elektrisch über je einen komplexen Abschlußwiderstand ( 82, 82' ) an den anderen Führungsstromausgangspol des Führungsstromgenerators angeschlossen sind und

daß der Widerstandswert des Abschlußwiderstandes für die betreffende Führungsfrequenz wesentlich größer ist als der Innenwiderstand "Ri" der zugehörigen Führungsleiterstrecke.

Fig. 1A

Fig. 1B

Fig. 2

Fig. 2A

Fig. 4

Fig. 5

Fig. 6

37363 - 2/5

0211327

Fig. 3

P 37363 - 3/5

**Fig. 7**

**Fig. 9**

**Fig. 10**

0211327

4/5

P 37363 - 4/5

Fig. 8

P 37363 - 5/5